# EUROPÄISCHE PATENTANMELDUNG

(11) **EP 4 762 939 A1**
(43) Veröffentlichungstag der Anmeldung: **24.06.2026**
(21) Anmeldenummer: 24222872.4
(22) Anmeldetag: 23.12.2024
(51) Int. Cl.: A23J 1/14, A23K 10/12, A23K 10/30, A23K 40/10, A23K 50/75, B02B 5/02

(54) **VERFAHREN ZUR HERSTELLUNG EINES EXTRAKTIONSSCHROTERZEUGNISSES UND EXTRAKTIONSSCHROTERZEUGNIS**

(71) Anmelder: Bazylchuk, Viktor, 03115 Kyiv (UA); Skyba, Borys, 62341 Kharkiv Region Dergachi Destrict (UA)
(72) Erfinder: Bazylchuk, Viktor, 03115 Kyiv (UA); Skyba, Borys, 62341 Kharkiv Region Dergachi Destrict (UA)
(74) Vertreter: VKK Patentanwälte PartG mbB

(57) **Zusammenfassung**

Die Erfindung betrifft Verfahren zur Herstellung eines Extraktionsschroterzeugnisses mittels Aufbereitung eines Edukts in Form von Extraktionsschrot von Raps und/oder Sonnenblumen, aber auch Soja, aufweisend einen Schritt 1 der Eduktvorbereitung und einen Schritt 2 der mechanischen Aufbereitung, wobei in Schritt 2 nach einer Siebung Korngrößenfraktionen erhalten werden, die spezifisch für jede Korngrößenfraktion weiter aufbereitet werden sowie ein Extraktionsschroterzeugnis aus Raps- und/oder Sonnenblumenextraktionsschrot mit einer Korngröße < 160 µm und gegenüber dem Extraktionsschrot einen um 10 bis 15% erhöhten Rohproteingehalt und einen um 50% verminderten Faseranteil.

## Beschreibung

Die vorliegende Erfindung betrifft ein Verfahren zur Herstellung eines Extraktionsschroterzeugnisses sowie ein entsprechendes Extraktionsschroterzeugnis.

Extraktionsschrot entsteht bei der Verarbeitung von Ölpflanzen wie Raps, Sonnenblumen oder Soja in Ölmühlen als Koppelprodukt. Nach der Lösungsmittelextraktion des Öls aus den Ölpflanzen und der Trocknung des verbleibenden Restes verbleibt eine Trockensubstanz aus Kernen und Hülsen, die als Extraktionsschrot bezeichnet wird und als fettarmes und eiweißreiches Futtermittel verwendet wird. Dessen Qualität hinsichtlich des Eiweißgehaltes hängt von dem Druck und der Temperatur des Trocknungsvorganges ab.

Werden die Ölpflanzen zur Ölgewinnung kalt gepresst, entsteht ein Presskuchen als fester Rückstand. Dieser Presskuchen ist ein fett- und eiweißhaltiges Futtermittel mit für Rapskuchen etwa 11 % Fett und etwa 30% Proteingehalt, wobei die Proteine vor allem Globuline und Albumine sind. Etwa 10% beträgt der Rohfasergehalt in diesem Presskuchen.

Rapskuchen wird als Leistungsfutter für vor allem Rinder und Schweine verwendet, wobei dessen Verwendbarkeit durch seinen Glucosinolatgehalt bestimmt wird, der zu einer verminderten Futteraufnahme und gesundheitlichen Störungen führen kann. Geflügel ist gegenüber einem hohen Glucosinolatgehalt empfindlicher, so dass Rapskuchen weniger für die Geflügelfütterung verwendet wird. Glucosinolate, als sekundäre und aus Aminosäuren gebildete Pflanzeninhaltsstoffe, werden auch als Senfölglycoside bezeichnet und sind schwefel- und stickstoffhaltige Verbindungen aus der Zuckerkomponente Glukose und einer Sulfatgruppe.

Rapsextraktionsschrot wird wie Rapskuchen hauptsächlich in der Viehfütterung von Rindern und Schweinen als Proteinkomponente eingesetzt, wobei auch hier der Glucosinolatgehalt den Einsatz begrenzt.

Die Ölmühlen in Deutschland produzieren geschätzte 700.000 Tonnen Rapskuchen, Tendenz steigend. Demgegenüber werden in Deutschland etwa 5 Millionen Tonnen Rapsextraktionsschrot pro Jahr produziert. Rapsextraktionsschrot hat daher eine entsprechend hohe wirtschaftliche Bedeutung. In anderen europäischen Staaten, insbesondere der Ukraine werden entsprechende und höhere Jahresmengen erzeugt.

Ölextraktionsanlagen unterscheiden sich sowohl im technologischen Prozess als auch in den eingesetzten Maschinentypen, weshalb die in verschiedenen Betrieben produzierten Schrotarten physikalisch und chemisch unterschiedlich zusammengesetzt sind, was deren Aufarbeitung erschwert. Beispielsweise weist der Sonnenblumenschrot, der in Ölextraktionswerken anhand von Walzenmaschinen hergestellt wurde, eine stark beschädigte Schalenstruktur auf.

Aus der DE 10 2021 128 016 ist ein Verfahren bekannt, bei dem ein Rapspresskuchen zunächst durch Filtration oder Schwerkrafttrennung (Dekantieren) von seinen Schalenanteilen getrennt wird und das so erhaltene Sediment in einer wässrigen Lösung bei erhöhter Temperatur suspendiert wird, um Proteine in Lösung zu bringen. Durch starke Abkühlung erfolgt eine Ausfällung eines proteinreichen Sediments, das abgetrennt und erneut mit Wasser versetzt wird. Diese weitere Suspension wird erneut stark abgekühlt, so dass weiteres proteinreiches Sediment ausfällt und abgetrennt werden kann.

Die DD 278 271 A1 will Rapsextraktionsschrot auf technologisch einfache Weise so behandeln, dass eine Schadstoffwirkung vermindert ist. Hierzu schlägt sie vor, Rapsextraktionsschrot während der mechanischen Futtermittelaufbereitung (Pelletieren) unter Druck von mehr als 4 MPa und Temperaturen oberhalb von 60°C auszusetzen und dabei ggf. mit Kalzium zu versetzen.

Das Edukt Extraktionsschrot enthält nicht miteinander verbundene Bestandteile wie Spelze und Eiweiß sowie teilweise miteinander verbundene Bestandteile wie Eiweißklumpen, die an den Spelzen haften. Schließlich sind auch miteinander verbundene Bestandteile enthalten, nämlich Schrotklumpen gemischt mit anhaftenden oder eingeschlossenen Eiweiß- und Spelzepartikeln. Aufgrund dieser Diversität ist eine Aufarbeitung dieses Extraktionsschrots grundsätzlich schwierig.

Die vorliegende Erfindung stellt sich die Aufgabe, ein Verfahren anzugeben, mit dem ein Extraktionsschroterzeugnis herstellbar ist, dessen Verträglichkeit insbesondere für Geflügel erhöht ist, wobei Extraktionsschritte unter Einsatz von Flüssigkeiten vermieden werden sollen.

Diese Aufgabe wird durch ein Verfahren gelöst, dass ausgehend vom Edukt - einem Extraktionsschrot - den Proteingehalt erhöht und den Faseranteil senkt, insbesondere nur durch eine mechanische Verarbeitung von insbesondere und bevorzugt Raps- und Sonnenblumenextraktionsschrot aber auch von Sojaextraktionsschrot.

Das erfindungsgemäße Verfahren weist dazu folgende Schritte auf: Ein Schritt 1 der mechanischen Eduktvorbereitung, gefolgt von einem Schritt 2 der mechanischen Aufbereitung des vorbereiteten Eduktes, gefolgt von einem Schritt 3 der Produktaufbereitung.

Das erfindungsgemäße Verfahren erhöht durch Anwendung ganz bestimmter mechanischer Aufarbeitungsschritte in ganz bestimmter Reihenfolge den Rohproteingehalt um 10 bis 15% und senkt den Faseranteil um 50%, so dass nach Anwendung des Verfahrens ein Extraktionsschrotprodukt aus Raps- und Sonnenblumenextraktionsschrot mit hohem Nährwert für Nutztiere, insbesondere Geflügel, erhalten wird. Mit ganz großem Vorteil ist dieses Produkt problemlos zur Geflügelfütterung geeignet, so dass hierfür weniger Sojaschrot eingesetzt werden muss, was aus ökologischen Gründen und Gründen der Resilienz wünschenswert ist. Aufgrund der kostengünstigen Herstellung durch das erfindungsgemäße Verfahren ist das erfindungsgemäße Extraktionsschrotprodukt auch günstiger im Vergleich zu den bisher eingesetzten Sojaschrotprodukten, so dass auch ökonomische Vorteile vorhanden sind. Das Verfahren ist jedoch auch problemlos auf Sojaextraktionsschrot anwendbar und liefert ein Produkt mit verbesserten Eigenschaften, wie geschildert.

Nachfolgend werden die Schritte des mehrstufigen Verfahrens sowie das erhaltene Produkt näher beschrieben.

Der Schritt 1 der Eduktvorbereitung umfasst insbesondere einen ersten Teilschritt der Zerkleinerung und nachfolgend einen zweiten Teilschritt der Steinentfernung, vorzugweise noch gefolgt von einem dritten Teilschritt der Abscheidung magnetischer und magnetisierbarer Stoffe. Die Erfindung versteht unter Steinen hierbei alle mineralischen Körper natürlichen oder künstlichen Ursprungs wie Steine, Kiesel, Grobsand, Sand, Glas, Keramik und insbesondere bis hinunter zu Korngrößen von 2 mm. Die Zerkleinerung erfolgt bevorzugt mittels eines Hammerbrechers per Schlag- und Prallzerkleinerung, die anschließende Steinentfernung mittels eines Trockensteinauslesers mit schwingender Siebplatte, bei dem das Trenngut aus dem Hammerbrecher auf eine schwingendes, schräges Sieb gegeben und von unten mit einem Luftstrom so beaufschlagt wird, dass die Steine nach oben zum Schwergutaustrag transportiert und die leichteren Bestandteile vom Sieb abgehoben und bergab zum Leichtgutaustrag befördert werden. Der optionale dritte Teilschritt erfolgt mittels eines Magnetabscheiders, der neben ferromagnetischen Materialien auch Schwerminerale abtrennt.

Das so aufbereitete Edukt wird insbesondere über eine Dosierwaage dem zweiten Schritt der Erfindung - der mechanischen Aufbereitung - dosiert zugeführt.

Der Schritt 2 der mechanischen Aufbereitung enthält wiederum mehrere Teilschritte, wobei die einzelnen Teilschritte auch mehrfach durchlaufen werden können. Vorgesehen sind insbesondere ein Teilschritt des Zerkleinerns - insbesondere Mahlens-, des fraktionierenden Siebens und des Zentrifugaltrennens. Dieser Schritt führt zu dem gewünschten Rohprodukt. Im Schritt 2 werden die Spelzen mechanisch abgetrennt, wobei diese als Hüll-, Deck- und Vorspelzen auftreten und entsprechend unterschiedliche Formen und Eigenschaften aufweisen. Synonym werden im Weiteren die Begriffe Hülse(n) und Spelze für die Gesamtheit der abzutrennenden, nicht als Futter geeigneten Bestandteile des Extraktionsschrots verwendet. Dieser Schritt der Abtrennung entfernt die nicht miteinander verbundenen, freien Bestandteile des Extraktionsschrots voneinander. Er führt ebenfalls zur Anreicherung von eiweißhaltigen Bestandteilen des Extraktionsschrots.

Im ersten Teilschritt des Schrittes 2 erfolgt eine Zerkleinerung des aufbereiteten Eduktes mittels einer oder mehrerer Walzenmaschinen. Das zerkleinerte aufbereitete Edukt wird in einem zweiten Teilschritt des Schrittes 2 fraktionierend gesiebt, insbesondere in einer oder mehreren Kreisschwing-Siebmaschinen mit jeweils bis zu sechs Ein- und Ausgängen und mehreren zehn Quadratmetern nutzbarer Siebfläche in bevorzugt mehreren Siebböden. In diesem zweiten Teilschritt wird das gereinigte Edukt in Korngrößenfraktionen von > 400 µm, 250-350 µm, 250-200 µm und 200-160 µm sowie <160 µm getrennt. Die Untergrenze einer Korngrößenfraktion ist dabei bevorzugt die Obergrenze der nächstkleineren Korngrößenfraktion, wobei geringe Überlappungen technisch bedingt möglich sind. Aufgabemenge, Siebbodenbewegung und Siebzeit werden entsprechend gewählt.
Die Korngrößenfraktion > 400 µm wird als Spelze entfernt, insbesondere mittels einer entsprechenden Förderschnecke.
Die nachfolgenden nächstkleineren Korngrößenfraktionen werden einer Schrotschleuder zugeführt, um weiter nach Korngröße fraktioniert zu werden. Diese trennt durch geeignete Wahl des Abstandes von Rotor und Siebzylinder sowie des Siebbandes weitere, nicht miteinander verbundene Bestandteile des gesiebten Extraktionsschrots ab. Das geschleuderte Gut wird zur Zerkleinerung zurückgeführt und bevorzugt auf einer Walzenmaschine erneut zerkleinert sowie danach erneut gesiebt. Eine so erhaltene Korngrößenfraktion von < 160 µm, insbesondere <140 µm wird als Produkt ausgeschleust.
Die Fraktion mit der kleinsten Korngröße von 140 µm wird als Produkt ausgeschleust. Die Fraktion mit einer Korngröße von 160 µm wird nochmals zerkleinert und nach Durchlaufen eines weiteren Siebschrittes der so gewonnene Anteil mit einer Korngröße von 140 µm als Produkt ausgeschleust.

Für das Verfahren ist es wesentlich, dass zunächst aus der ersten Siebung Korngrößenfraktionen erhalten werden, die anschließend spezifisch für jede Korngrößenfraktion weiter aufbereitet werden, um insbesondere nicht-, gering- oder stärker miteinander verbundene Bestandteile voneinander zu trennen. Hierbei können Art und Umfang der Aufarbeitung durchaus und erfindungsgemäß von Korngrößenfraktion zu Korngrößenfraktion unterschiedlich sein, zumal diese insbesondere unterschiedliche Anteile an den genannten Bestandteilen mit unterschiedlicher Bindungsstärke aufweisen.

Der optionale Schritt 3 der Produktaufbereitung des Rohproduktes enthält die Teilschritte des Filterns mittels eines Schlauchfilters und/oder Windsichtens und ggf. nochmals eine biologische Aufreinigung mittels eines Entoleters.

Das so erhaltene Produkt weist einen deutlich erhöhten Eiweißgehalt auf, insbesondere von > 18 Gew.-%. Die Korngrößenfraktionen von größer gleich 240 µm enthalten sehr viel weniger Eiweiß, insbesondere weniger als 10 Gew.-%.

Aus dem zuvor ausgeführten folgt, dass das Edukt Extraktionsschrot mehrstufig verarbeitet wird, um die Spelzen zu entfernen und den Eiweißgehalt im Endprodukt zu erhöhen.

Hierbei sind die Korngrößenfraktionen von 250 µm bis 140 µm die schwierigsten Fraktionen in der Weiterverarbeitung. Jede dieser beiden Fraktionen besteht zu 90% aus verbundenen Komponenten ähnlicher Zusammensetzung. Daher erfolgt die weitere Zerkleinerung dieser Fraktionen jeweils in zwei Stufen mit einem Walzenabstand von nicht mehr als 60 µm zur Vermeidung der Entstehung einer homogenen Masse, die in Siebmaschinen nicht weiter getrennt werden kann.

Das erfindungsgemäße Extraktionsschroterzeugnis aus Raps- und/oder Sonnenblumenextraktionsschrot und/oder Sojaextraktionsschrot, insbesondere erhalten über das zuvor beschriebene Verfahren ist dadurch gekennzeichnet, dass es eine Korngröße < 160 µm aufweist und gegenüber dem Extraktionsschrot, aus dem es gewonnen wurde, einen um 10 bis 15% erhöhten Rohproteingehalt und einen um 50% verminderten Faseranteil aufweist.

Dieses Extraktionsschroterzeugnis weist bevorzugt einen Eiweißgehalt von > 30 Gew.-% auf, insbesondere von > 35 Gew.-% und besonders bevorzugt von ≥ 40 Gew.-% und/oder einen Faseranteil von < 12 Gew.-%, insbesondere von < 10 Gew.-% und besonders bevorzugt von ≤ 9 Gew.-%.

In Ausgestaltung der Erfindung ist vorgesehen, dass das Extraktionsschroterzeugnis mit Milchsäurebakterien fermentiert ist und neben Milchsäurebakterien auch Fermentationsmetabolite enthält. Das so behandelte Extraktionsschroterzeugnis ist leicht verdaulich und stabilisiert die Darmfauna der Tiere, die mit diesem gefüttert werden.

Schließlich ist noch vorgesehen, dass das Extraktionsschroterzeugnis auch zugesetzte Aminosäuren enthält, insbesondere in einem Gew.-Anteil zwischen 0,1 Gew.-% bis 5 Gew.-%, insbesondere, um den Nährwert nochmals zu erhöhen.

Das erfindungsgemäße Verfahren wird nachfolgend anhand der Figuren der Zeichnung eines Ausführungsbeispiels näher erläutert. Hierbei zeigen
Fig. 1 :ein Grundschema des Verfahrens und
Fig. 2:die Teilschritte des zweiten Schrittes im Detail.

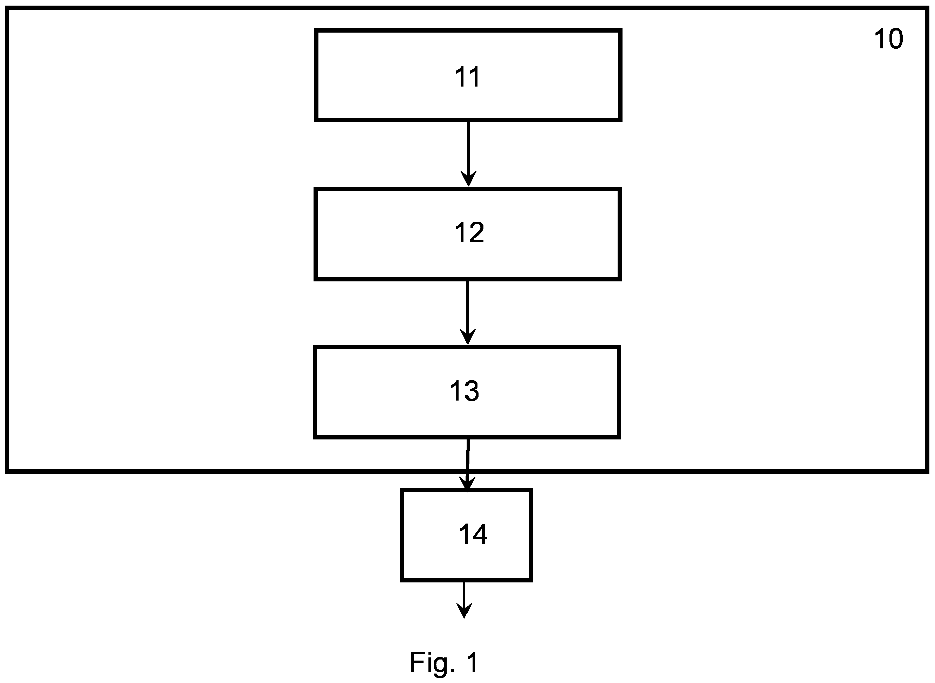

**Fig.** 1 zeigt die drei Hauptschritte 10, 20 und 30 in schematischer Ansicht. Beginnend mit dem Schritt 1 der Eduktvorbereitung 10, gefolgt von Schritt 2 der mechanischen Aufbereitung 20 zu Schritt 3 der Produktaufbereitung des Rohproduktes 30.

In Schritt 1 der Eduktvorbereitung 10 wird das Edukt zunächst in einem ersten Teilschritt 11 zerkleinert, insbesondere mit einem Hammerbrecher bei einer Rotordrehzahl von rund 1.500 U/min und einem Luftverbrauch von 2.700 m³/s. Nach dieser Zerkleinerung folgt ein zweiter Teilschritt 12 der Steinentfernung aus dem Edukt mittels eines Trockensteinauslesers mit schwingender Siebplatte. Die Siebfläche beträgt dabei bevorzugt 1 m², der Anstellwinkel der Siebplatte zwischen 5 und 10°. Diese schwingt mit 950/min bei einer Amplitude von 2 bis 3 mm. Der Luftstrom beträgt insbesondere 5.000 m³/h. Das aus dem Leichtgutaustrag des Trockensteinauslesers kommende Eduktstrom wird in einem dritten Teilschritt 13 einem Magnetabscheider zugeführt, der in erster Linie ferromagnetischen Materialien abtrennt. Dieser weist bevorzugt drei Blöcke mit je einem Magneten auf, die eine magnetische Induktion in einem Abstand von 15 mm von der Achse des Magnetblocks in Höhe von 100 mT erzeugen und so magnetische und magnetisierbare Stoffe aus dem Edukt entfernen.

Das so aufgereinigte Edukt wird dem zweiten Schritt des beanspruchten Verfahrens zugeführt, insbesondere dosiert über eine Dosierwaage 14. Diese führt bevorzugt maximal 50 t/h gereinigtes Edukt dem Schritt 2 des Verfahrens zu und weist dabei einen Fehlergrenzwert von weniger als 0,1 Gew.-% auf.

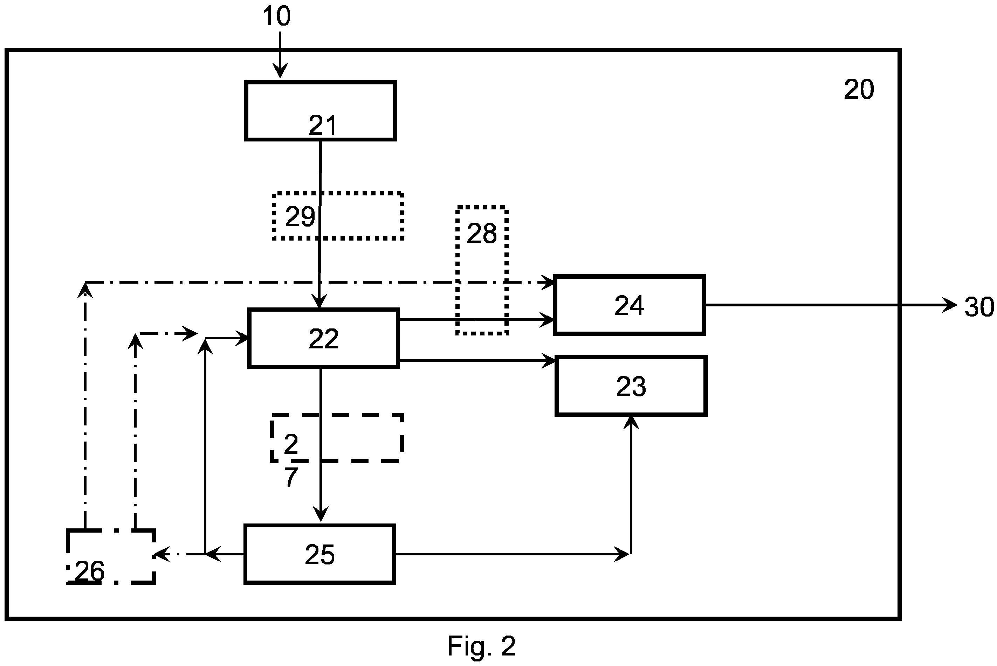

Fig. 2 zeigt Schritt 2 der mechanischen Aufbereitung 20 in einer ersten Ausführungsform im Detail. Das aufgereinigte Edukt aus Schritt 1 wird dosiert der Zerkleinerung 21 in einer oder zwei parallelen Walzenmaschinen zugeführt und gelangt anschließend zur Korngrößenfraktionierung 22 in eine Siebmaschine, die insbesondere mehrere Passagen aufweist. Die Walzenmaschinen sind dabei Glattmahlwalzen oder Schnittwalzenmaschinen.

Eine nach Siebung erhaltene Korngrößenfraktion > 400 µm wird als Spelze 23 ausgesondert. Eine nach Siebung erhaltene Korngrößenfraktion von 130 µm bis 140 µm wird als Produkt 24 gesammelt. Die nach fraktionierender Siebung erhaltenen beiden Korngrößenfraktion 400 µm bis 250 µm und 250 µm bis 200 µm und 200 µm bis 160 µm werden getrennt voneinander einem weiteren Trennungsgang 25 zugefügt, in dem eine oder mehrere Schrotschleuder(n) durch geeignete Wahl des Abstandes von Rotor und Siebzylinder sowie der Öffnungsweiten des Siebbandes weitere als Produkt ungeeignete Bestandteile dieser Korngrößenfraktionen abtrennt und jeweils als Spelze 23 aussondert. Die so weiterbehandelten Siebfraktionen werden einzeln und getrennt voneinander zurück zur Siebung 22 geführt und dort erneut fraktioniert, wobei diese Siebung 22 auf weiteren Siebmaschinen durchgeführt wird.

Optional ist für die weiterbehandelte Siebfraktion vor Rückführung zur Siebung 22 auch eine Nachsichtung 26 vorgesehen, die in Fig. 2 mit einer Strichpunktierung dargestellt ist. Die aus der Nachsichtung 26 erhaltene Korngrößenfraktion 140 µm bis 130 µm wird dem Produkt 24 zugeführt, der restliche Teil mit größeren Korngrößen zurück zur Siebung 22 geführt.

In einer weiteren Ausgestaltung des Verfahrens ist zwischen der oder den Siebmaschine(n) 22 und dem weiteren Trennungsgang 25 eine Magnetabscheidung 27 vorgesehen, in Fig. 2 gestrichelt dargestellt.

In einer weiteren Ausgestaltung des Verfahrens ist zusätzlich oder alternativ eine Säuberung 28 der Korngrößenfraktion 140 µm bis 130 µm vorgesehen, in Fig. 2 gepunktet dargestellt. Diese erfolgt insbesondere in einem Windsichter.

In einer noch anderen Ausgestaltung des Verfahrens ist ein Schritt der biologischen Reinigung 29 in Form der Entfernung von Insekten und deren Eier in einem Entoleter vorgesehen. Dieser befindet sich in der pneumatischen Förderkette vor der Zuführung der vermahlenen Produkte in die Siebmaschine(n) 22 und ist in Fig. 2 ebenfalls gepunktet eingefügt.

Das erfindungsgemäße Verfahren ermöglicht über das beschriebene Klassieren die Trennung eines dispersen Feststoffgemisches - dem Extraktionsschrot - nach geometrischer Partikelgröße den Erhalt einer Fraktion mit hoher Eiweißdichte, die als Futtermittel für Geflügel geeignet ist und als Raps- und Sonnenblumenextraktionsschrotprodukt Sojaschrot ersetzen kann.

### BEZUGSZEICHENLISTE

10 Eduktvorbereitung
11 Erster Teilschritt Zerkleinerung
12 Zweiter Teilschritt Steinaussonderung
13 Dritter Teilschritt Magnetabscheidung
14 Dosierung über Dosierwaage
20 Mechanische Aufbereitung
21 Zerkleinerung
22 Korngrößenfraktionierung
23 Spelze
24 Produkt
25 Weitere Aufarbeitung / Schleuder
26 Nachsichtung
27 Magnetabscheidung
28 Säuberung Windsichter
30 Aufreinigung

## Patentansprüche

1. Verfahren zur Herstellung eines Extraktionsschroterzeugnisses mittels Aufbereitung eines Edukts in Form von Extraktionsschrot von Raps und/oder Sonnenblumen und/oder Soja, aufweisend einen Schritt 1 der Eduktvorbereitung und einen Schritt 2 der mechanischen Aufbereitung, wobei in Schritt 2 nach einer Siebung Korngrößenfraktionen erhalten werden, die spezifisch für jede Korngrößenfraktion weiter aufbereitet werden.

2. Verfahren gemäß Anspruch 1, bei dem in Schritt 1 das Edukt in einem Teilschritt zerkleinert und in einem anderen Teilschritt aus diesem Steine entfernt werden, vorzugsweise in einem weiteren Teilschritt aus dem Edukt magnetische und/oder magnetisierbare Materialien entfernt werden.

3. Verfahren gemäß Anspruch 1 oder 2, bei dem in Schritt 2 in einem ersten Teilschritt eine Zerkleinerung des in Schritt 1 aufbereiteten Eduktes erfolgt, insbesondere mittels einer oder mehrerer Walzenmaschinen, und in einem zweiten Teilschritt eine fraktionierende Siebung erfolgt, insbesondere in einer oder mehreren Kreisschwing-Siebmaschinen, wobei bevorzugt die Korngrößenfraktionen von > 400 µm, 250-350 µm, 250-200 µm und 200-160 µm sowie <160 µm erhalten werden.

4. Verfahren gemäß Anspruch 1, 2 oder 3, bei dem in einem dritten Teilschritt die Korngrößenfraktionen von 250-350 µm, 250-200 µm und 200-160 µm jeweils einer Zentrifugaltrennung unterzogen werden, insbesondere in einer Schrotschleuder, um innerhalb der jeweiligen Korngrößenfraktion weiter fraktioniert zu werden, insbesondere zum jeweiligen Erhalt einer Korngrößenfraktion von < 140 µm als Produkt und Extraktionsschroterzeugnis.

5. Verfahren gemäß Anspruch 4, bei dem der jeweils verbliebene Teil jeder Korngrößenfraktion getrennt zur erneuten Zerkleinerung in den ersten Teilschritt rückgeführt wird.

6. Verfahren gemäß einem der vorherigen Ansprüche, bei dem ein Schritt 3 der Aufbereitung des Produktes aus Schritt 2 vorgesehen ist, insbesondere ein Filterschritt und/oder ein Schritt des Windsichtens.

7. Verfahren gemäß einem der vorherigen Ansprüche, bei dem zwischen zweitem und dritten Teilschritt von Schritt 2 eine Abtrennung von magnetischen und/oder magnetisierbaren Stoffen erfolgt.

8. Verfahren gemäß einem der vorherigen Ansprüche, bei dem ein Schritt der biologischen Reinigung in Form der Entfernung von Insekten und deren Eier in einem Entoleter erfolgt.

9. Extraktionsschroterzeugnis aus Raps- und/oder Sonnenblumenextraktionsschrot und/oder Sojaextraktionsschrot, insbesondere erhalten über ein Verfahren gemäß einem der Anspräche 1 bis 8, **dadurch gekennzeichnet, dass** es eine Korngröße < 160 µm aufweist und gegenüber dem Extraktionsschrot, aus dem es gewonnen wurde, einen um 10 bis 15% erhöhten Rohproteingehalt und einen um 50% verminderten Faseranteil aufweist.

10. Extraktionsschroterzeugnis gemäß Anspruch 9, **dadurch gekennzeichnet, dass** es einen Eiweißgehalt von > 30 Gew.-% aufweist, insbesondere von > 35 Gew.-% und besonders bevorzugt von ≥ 40 Gew.-% aufweist und/oder einen Faseranteil von < 12 Gew.-%, insbesondere von < 10 Gew.-% und besonders bevorzugt von ^{<}_ 9 Gew.-% aufweist.

11. Extraktionsschroterzeugnis gemäß Anspruch 9 oder 10, **dadurch gekennzeichnet, dass** es mit Milchsäurebakterien fermentiert ist und neben Milchsäurebakterien auch Fermentationsmetabolite enthält.
